# EUROPEAN PATENT APPLICATION

(11) **EP 2 955 700 A2**
(43) Date of publication of application: **16.12.2015**
(21) Application number: 15172186.7
(22) Date of filing: 15.06.2015
(51) Int. Cl.: G07C 5/08

(54) **AUTOMATED EMERGENCY RESPONSE SYSTEMS FOR A VEHICLE**

(30) Priority: 15.06.2014 US 201414304970
(71) Applicant: Toyota Motor Engineering & Manufacturing North America, Inc., Erlanger, KY 41018 (US)
(72) Inventor: SCHULZ, Jason A., Erlanger, KY Kentucky 41018 (US); SHERONY, Rini, Erlanger, KY Kentucky 41018 (US)
(74) Representative: D Young & Co LLP

(57) **Abstract**

A method of automated emergency response for a vehicle includes identifying a condition with respect to the vehicle that indicates a potential collision and recoding imagery in response to the identifying.

## Description

### BACKGROUND

The present disclosure relates to a vehicle, and more particularly to an emergency response system therefor.

Vehicles often include emergency response systems in which an off board human adviser fields emergency calls that are manually initiated at the vehicle either by depressing an emergency button or are automatically initiated upon deployment of an air bag in the event of a collision. The emergency call indicates the geographic location of the vehicle, and places the adviser in voice communication with the passenger compartment. If the adviser determines that emergency attention is necessary because of occupant response, or because there was no response, the adviser may dispatch an emergency responder. Such systems thereby require interaction and reliance upon an often less than effective adviser.

### SUMMARY

The emergency response system described herein provides for the determination that an external object is moving toward the vehicle in a manner that indicates a potential collision to initiate recoding of a view around the vehicle. Subsequent review thereby permits viewing of the collision in progress. Such imagery may be useful to resolve liability and insurance issues, and/or in a collision avoidance database. The emergency response system can also identify a condition of the driver to determine an emergency medical condition, autopilot the vehicle to the side of a road, and communicate an alert directly to an emergency responder.

A computer storage media having embodied thereon computer-useable instructions that, when executed, perform a method, the method according to one disclosed non-limiting embodiment includes, identifying a condition with respect to the vehicle that indicates a potential collision, and recording imagery from around the vehicle in response to the identifying.

A computer storage media having embodied thereon computer-useable instructions that, when executed, perform a method, the method according to another disclosed non-limiting embodiment includes, identifying a condition of a driver of the vehicle indicative of an emergency medical condition, and initiating an automated pullover system to autopilot the vehicle.

A computer storage media having embodied thereon computer-useable instructions that, when executed, perform a method, the method according to another disclosed non-limiting embodiment includes, identifying a condition of a driver of the vehicle indicative of an emergency medical condition and communicating an alert to an emergency responder through a communication system in response to identification of the emergency medical condition.

The foregoing features and elements may be combined in various combinations without exclusivity, unless expressly indicated otherwise. These features and elements as well as the operation thereof will become more apparent in light of the following description and the accompanying drawings. It should be understood, however, the following description and drawings are intended to be exemplary in nature and non-limiting.

### BRIEF DESCRIPTION OF THE DRAWINGS

Various features will become apparent to those skilled in the art from the following detailed description of the disclosed non-limiting embodiments. The drawings that accompany the detailed description can be briefly described as follows:
Figure 1 is a schematic view of an example vehicle for use with an emergency response system;
Figure 2 is a view provided from the emergency response system;
Figure 3 is a flow chart illustrating operations of the emergency response system according to one disclosed non-limiting embodiment; and
Figure 4 is a flow chart illustrating operations of the emergency response system according to another disclosed non-limiting embodiment.

### DETAILED DESCRIPTION

An emergency response system for a vehicle is disclosed. The emergency response system provides a method that initiates recoding of images around the vehicle in response to the determination that an external object is moving toward the vehicle in a manner that may indicate a potential collision. The emergency response system includes an imaging sensor system and a distance measurement system that provides a full 360 degree view around the vehicle. Subsequent review of the imagery permits viewing of the collision in progress. The emergency response system can also include a driver monitor sensor to identify the biometric markers of the driver. The biometric markers can be utilized to indicate an emergency medical condition such as heart attack or stroke to initiate auto piloting of the vehicle, and communication of an alert to an emergency responder.

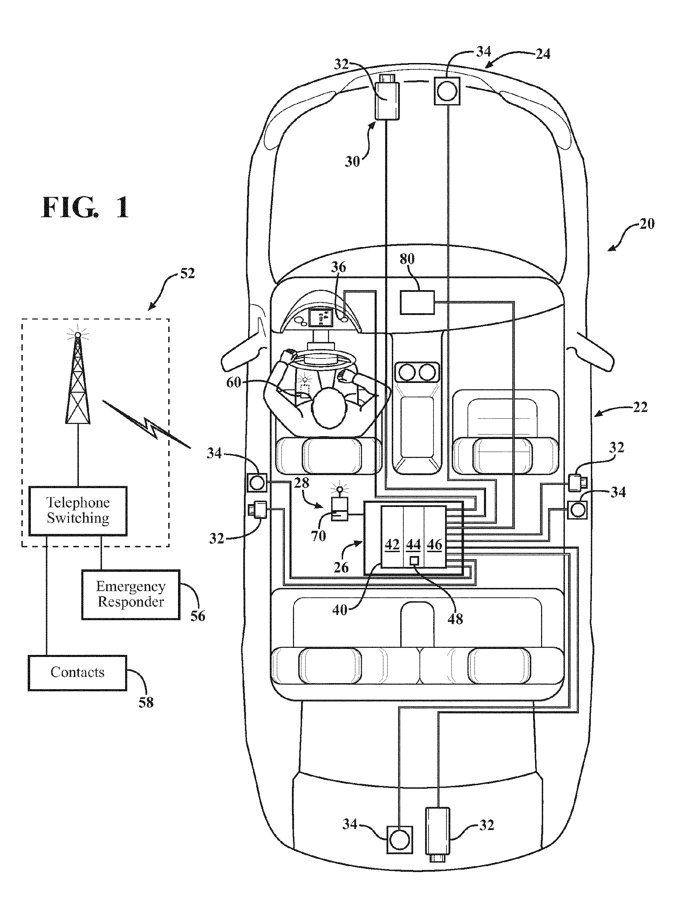

Figure 1 schematically illustrates a vehicle 20 with an emergency response system 22. The emergency response system 22 generally includes a sensor system 24, a control system 26, and a communication system 28. It should be appreciated that although particular systems are separately defined, each or any of the systems may be otherwise combined or segregated via hardware and/or software of the emergency response system 22.

The sensor system 24 may include various sensors operable to identify a condition associated with the vehicle such as a condition around the vehicle 20, within the vehicle 20, and/or a condition of the driver. In one disclosed non-limiting embodiment, the sensor system 24 includes a sensor array 30 directed outside of the vehicle 20 to identify a condition around the vehicle 20. The sensor array 30 includes a first sensor system 32 generally operable to view the surrounds of the vehicle and a second sensor system 34 generally operable to identify a rate of closure with respect to another vehicle or object.

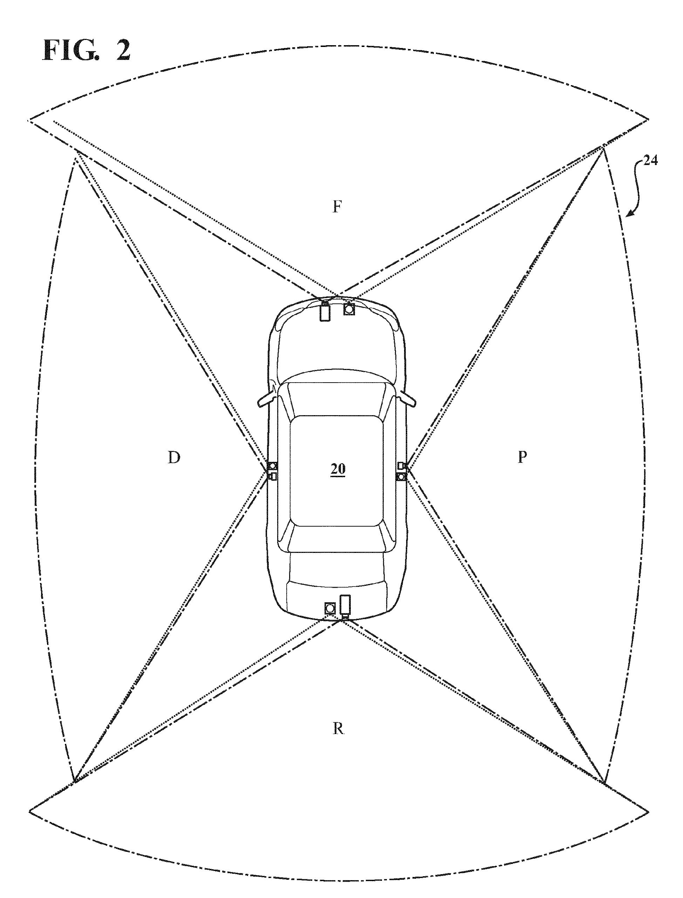

The first sensor system 32 provide imagery from within each of a front F, a passenger side P, a rear R and a driver side D of the vehicle 20 (Figure 2) to the control system 26. It should be appreciated that although four sensors are illustrated in the disclosed non-limiting embodiment, any number of sensors will benefit herefrom. The field of view of each sensor in the first sensor system 32 may overlap to provide a 360 degree view of that which surrounds the vehicle 20. Examples of sensors in the first sensor system 32 include, but are not limited to, video cameras, charge coupled devices, forward looking infrared, thermal systems and/or other imaging sensors and combinations thereof.

The second sensor system 34 provides a rate of closure, ranging, closing velocity, distance, identification and/or other non-imagery data from within each of the front F, passenger side P, rear R and driver side D of the vehicle 20 to the control system 26. It should be appreciated that although four sensors are illustrated in the disclosed non-limiting embodiment, any number of sensors will benefit herefrom. The field of view of each sensor of the second sensor system 34 may overlap to provide a 360 view of that which surrounds the vehicle 20. Examples of sensors in the second sensor system 34 include but are not limited to RADAR, SONAR, LIDAR and/or other distance measurement sensors and combinations thereof.

The sensor system 24 may alternatively or additionally include a driver monitor sensor 36 directed within the vehicle 20 to monitor a condition of the driver. The driver monitor sensor 36 in one disclosed non-limiting embodiment may identify the driver's biometric markers that can be indicative of an emergency medical condition such as heart attack or stroke. Example biometric markers identifiable by the driver monitor sensor 36 include, but are not limited to, heart rate, skin temperature, eye movements, sudden bodily movements, and/or others.

The control system 26 generally includes a control module 40 with a processor 42, a memory 44, and an interface 46. The control module 40 may be a portion of a central vehicle control, a stand-alone unit, or other system such as a cloud-based system. The processor 42 may be any type of microprocessor having desired performance characteristics. The memory 44 may include any type of computer readable medium that stores the data and control algorithms 48 described herein below. Other operational software for the processor 42 may also be stored in the memory 44. The interface 46 facilitates communication with other systems such as the sensor system 24, the communication system 28 and other on board systems. On board systems include but are not limited to, a vehicle head unit, vehicle diagnostic sensors, vehicle entertainment systems, vehicle automated control, and others.

The communication system 28 may also include a wireless communication system that is operable to communicate with an off board system 52 (illustrated schematically). The off board system 52 may include, for example, a terrestrial cellular tower in communication with a switching network to provide communication with an emergency responder 56. An emergency responder 56 may include, for example, police, ambulance, 911 public safety access point, etc. The communication system 28 may also establish communication with an off board contact 58 via the off board system 52, such as a parent, guardian, caregiver, friend, relative or other contact that may be preprogrammed by a driver.

The communication system 28 may also communicate with a personal electronic device 60 such as a tablet, smart phone, or other wearable device, e.g., a watch, eyeglasses, or other device. That is, the personal electronic device 60, in this disclosed non-limiting embodiment, is a device typically carried or worn by the driver that may have a list of contacts 58 with whom the emergency response system 22 may communicate.

The communication system 28 further includes a positional system 70 that is operable to determine the location of the vehicle 20 such as a GPS device. The communication system 28 is operable to interface with the positional system 70 to communicate the position of the vehicle 20 to the off board system 52 as well as identify, for example, a public safety access point that is local to a present position of the vehicle 20.

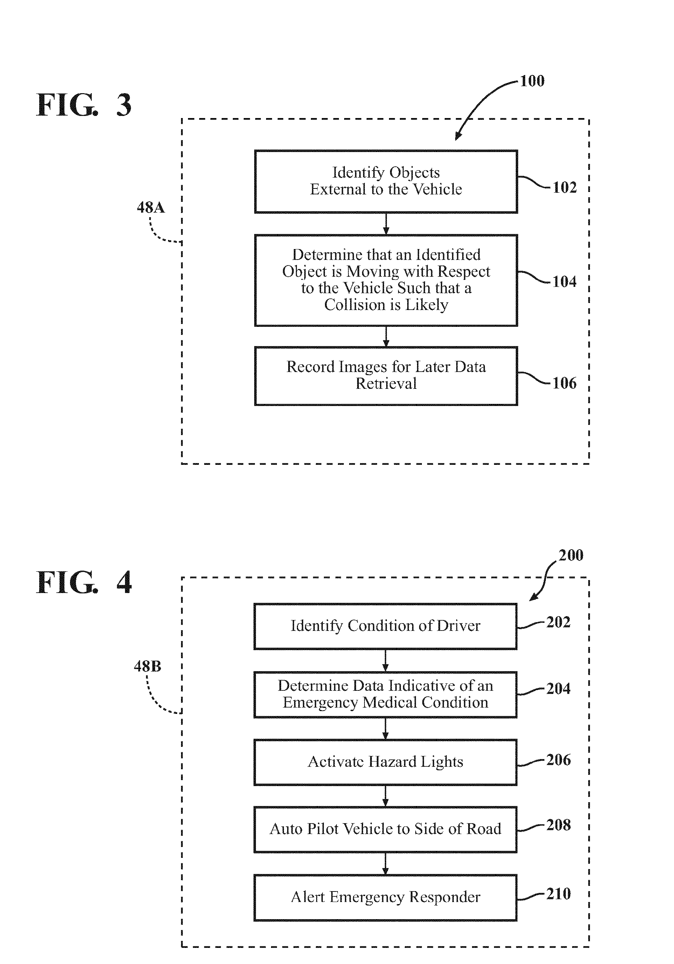

With reference to Figure 3, in one disclosed non-limiting embodiment, an algorithm 48A for operation of the emergency response system 22 is schematically illustrated. The functions of the algorithm 48A are disclosed in terms of functional block diagrams and it should be appreciated by those skilled in the art with the benefit of this disclosure that these functions may be enacted in either dedicated hardware circuitry or programmed software routines as a computer readable storage medium capable of execution as instructions in a microprocessor based electronics control embodiment such as the control system 26. That is, the memory 44 is an example computer storage media having embodied thereon computer-useable instructions such as the algorithms that, when executed, performs a method 100 of automated emergency response.

The method 100 of automated emergency response of the algorithm 48A initially utilizes the second sensor system 34 to detect the position, speed, and acceleration of other cars and external objects and report that data to the control module 40 (step 102). The control module 40 is then operable to determine that an external object is moving toward the vehicle 20 in a manner such that that a collision is likely (step 104). It should be appraised that "likely" as defined herein may encompass various statistical probabilities and sensitivities.

In response to the determination that the external object is moving toward the vehicle 20 in a manner such that that a collision is likely, the control module 40 initiates recoding of the images provided by the first sensor system 32 (step 106). That is, the image data from the first sensor system 32 is captured as video or periodic still photos for storage in the memory 44 or other storage device. Further, the memory 44 utilized to store the data from the first sensor system 32 may be otherwise available for other purposes. Subsequent data retrieval thereby permits viewing of the collision in progress, which may be useful for resolving liability and insurance issues, and/or in a crash circumstance/avoidance database.

With reference to Figure 4, in another disclosed non-limiting embodiment, an algorithm 48B for operation of the emergency response system 22 is schematically illustrated. The algorithm 48B provides an automated emergency response method 200. Initially, the automated emergency response method 200 utilizes the driver monitor sensor 36 to identify a condition of the driver and report that data to the control module 40 (step 202). The control module 40 is then operable to determine data indicative of an emergency medical condition such as heart attack or stroke (step 204). It should be appreciated that data indicative of an emergency medical condition may be of various sensitivities in response to, for example, a previously know medical condition of driver. That is, for a driver with previous heart conditions, the determination may have a lower threshold than that associated with a driver with no known medical condition.

In response to the determination of the emergency medical condition, the control module 40 can initiate an automated pullover system 80 (Figure 1) that is operable with the sensor system 24 and the control system 26 to control the vehicle 20. For example, the automated emergency response method 200 is operable to activate hazard lights (step 206), selectively autopilot the vehicle 20 to the side of a road (step 208), and communicate with the emergency responder (step 210) through the communication system 28.

The use of the terms "a," "an," "the," and similar references in the context of description (especially in the context of the following claims) are to be construed to cover both the singular and the plural, unless otherwise indicated herein or specifically contradicted by context. The modifier "about" used in connection with a quantity is inclusive of the stated value and has the meaning dictated by the context (e.g., it includes the degree of error associated with measurement of the particular quantity). All ranges disclosed herein are inclusive of the endpoints, and the endpoints are independently combinable with each other.

Although the different non-limiting embodiments have specific illustrated components, the embodiments of this invention are not limited to those particular combinations. It is possible to use some of the components or features from any of the non-limiting embodiments in combination with features or components from any of the other non-limiting embodiments.

It should be appreciated that like reference numerals identify corresponding or similar elements throughout the several drawings. It should also be appreciated that although a particular component arrangement is disclosed in the illustrated embodiment, other arrangements will benefit herefrom.

Although particular step sequences are shown, described, and claimed, it should be understood that steps may be performed in any order, separated or combined unless otherwise indicated and will still benefit from the present disclosure.

The foregoing description is exemplary rather than defined by the limitations within. Various non-limiting embodiments are disclosed herein, however, one of ordinary skill in the art would recognize that various modifications and variations in light of the above teachings will fall within the scope of the appended claims. It is therefore to be appreciated that within the scope of the appended claims, the disclosure may be practiced other than as specifically described. For that reason the appended claims should be studied to determine true scope and content.

## Claims

1. A computer storage media having embodied thereon computer-useable instructions that, when executed, perform a method, the method comprising:
identifying a condition with respect to the vehicle that indicates a potential collision; and
recording imagery from around the vehicle in response to the identifying.

2. The computer storage media as recited in claim 1, wherein the method step of recoding imagery is performed with a first sensor system.

3. The computer storage media as recited in claim 2, wherein the method step of identifying the condition is performed with a second sensor system different than the first sensor system.

4. The computer storage media as recited in claim 3, wherein the method step of identifying the condition includes identifying a rate of closure via at least one of RADAR, SONAR, and LIDAR.

5. The computer storage media as recited in claim 1, wherein the method step of recoding imagery includes at least one of recording video, and recording a series of still images.

6. A computer storage media having embodied thereon computer-useable instructions that, when executed, perform a method, the method comprising:
identifying a condition of a driver of the vehicle indicative of an emergency medical condition; and
initiating an automated pullover system in response to identification of the emergency medical condition to autopilot the vehicle.

7. The computer storage media as recited in claim 6, wherein the method step of identifying the condition of a driver is performed with a driver monitor sensor.

8. The computer storage media as recited in claim 7, wherein the method step of identifying the condition of the driver includes identifying at least one biometric marker of the driver selected from the group consisting of a heart rate, a skin temperature, an eye movement and a sudden bodily movement.

9. The computer storage media as recited in claim 6, wherein the method further comprises activating a vehicle hazard light and auto piloting the vehicle to a side of a road.

10. The computer storage media as recited in claim 6, wherein the method further comprises communicating an alert to an emergency responder in response to identifying the emergency medical condition.

11. A computer storage media having embodied thereon computer-useable instructions that, when executed, perform a method, the method comprising:
identifying a condition of a driver of the vehicle indicative of an emergency medical condition; and
communicating an alert to an emergency responder through a communication system in response to identification of the emergency medical condition.

12. The computer storage media as recited in claim 11, wherein the method further comprises initiating an automated pullover system in response to the identification of the emergency medical condition to selectively autopilot the vehicle to a side of a road.

13. The method as recited in claim 12, wherein the method further comprises activating a vehicle hazard light.

14. The computer storage media as recited in claim 12, wherein the step of identifying is performed with a driver monitor sensor operable to identify at least one biometric marker of the driver.

15. The computer storage media as recited in claim 14, wherein the biometric marker includes at least one of a heart rate, a skin temperature, an eye movement and a sudden bodily movement.
